# EUROPEAN PATENT SPECIFICATION

(11) **EP 4 333 167 B1**
(45) Date of publication and mention of the grant of the patent: **24.12.2025**
(21) Application number: 22795167.0
(22) Date of filing: 06.01.2022
(51) Int. Cl.: H01M 50/15, H01M 50/317, H01M 50/325

(54) **PRESSURE REGULATION VALVE**
DRUCKREGELVENTIL
VANNE DE RÉGULATION DE PRESSION

(30) Priority: 28.04.2021 JP 2021075908
(43) Date of publication of application: 06.03.2024
(73) Proprietor: NOK Corporation, Tokyo 105-8585 (JP)
(72) Inventor: SAKUMA, Katsuyoshi, Kita Ibaraki-shi, Ibaraki 319-1535 (JP); SHINCHI, Yusei, Aso-shi, Kumamoto 869-2231 (JP)
(74) Representative: Global IP Europe Patentanwaltskanzlei
(86) International application number: PCT/JP2022/000254
(87) International publication number: WO 2022/230244

(56) References cited:
- WO-A1-2019/064843
- JP-A- 2001 057 198
- JP-A- 2013 062 120
- JP-A- 2019 096 391
- JP-A- 2020 102 323
- JP-A- 2020 102 541
- JP-A- H11 250 887
- US-B2- 6 645 661

## Description

### Technical Field

The present invention relates to a pressure regulating valve. More specifically, the present invention relates to a pressure regulating valve used in a power storage module.

### Description of the Related Art

Conventionally, a bipolar battery (power storage module) including a bipolar electrode in which a positive electrode is formed on one surface of a current collector and a negative electrode is formed on the other surface is known (see, for example, Patent Document 1).

In the battery, an electrolytic solution is enclosed in an internal space defined by a separator, a current collector, and a seal member. A bipolar electrode is stacked via an electrolyte layer formed of the separator impregnated with the electrolytic solution. Further, the battery is provided with a tube passing through the seal member. That is, one end of the tube is disposed on the internal space side, and the other end thereof protrudes from the battery to the outside.

During use of the battery, hydrogen may be generated due to, for example, overdischarge, which may increase the pressure in the internal space of the battery. When the pressure in the internal space of the battery increases in this way, the tube opens, and thus functions as a pressure regulating valve.

However, in the configuration described in Patent Document 1, it is necessary to attach each tube to each internal space, and the configuration of the bipolar battery including the tube as a pressure regulating valve tends to be complicated. Therefore, a power storage module capable of adjusting pressure in a plurality of internal spaces between bipolar electrodes with a simple configuration has been reported (see, for example, Patent Document 2).

JP 2001 057198 A discloses a pressure regulating valve for a power storage module, according to the preamble of claim 1, comprising: a housing having a housing main body with an opening and with a recess formed in the inside and a cover body that closes the opening of the housing main body; and a columnar valve element that is an elastic member housed in the recess of the housing main body of the housing, wherein the housing main body has a pressure introduction passage formed of a through-hole into which pressure from a power storage module is introduced at a bottom of the recess, and the pressure introduction passage has a pressure introducing part which is a columnar space passing through the housing main body, and a groove which is connected to the pressure introducing part and opens to a surface of the bottom, the valve element is arranged so as to cover an aperture on the bottom side in the pressure introduction passage, the cover body has a protrusion in contact with an end face of the valve element, and the pressure regulating valve is configured such that the opening of the housing main body is closed with the cover body, whereby the protrusion of the cover body pressurizes the valve element, and the valve element airtightly closes the pressure introduction passage.

### Citation List

### Patent Document

[Patent Document 1] JP-A-2010-287451
[Patent Document 2] International Publication WO 2019/064843

### SUMMARY OF THE INVENTION

### Problem to be Solved by the Invention

However, even in the pressure regulating valve in the power storage module described in Patent Document 2, there is room for further improvement in that the valve is opened at a desired pressure with high accuracy.

The present invention has been made in view of such a prior art, and an object of the present invention is to develop a pressure regulating valve capable of opening a valve at a desired pressure with high accuracy.

### Means for Solving the Problems

According to the present invention, the following pressure regulating valve is provided.
[1] A pressure regulating valve for a power storage module, including:
   a housing having a housing main body with an opening and with a recess formed in the inside and a cover body that closes the opening of the housing main body; and
   a columnar valve element that is an elastic member housed in the recess of the housing main body of the housing, wherein
   the housing main body has a pressure introduction passage formed of a through-hole into which pressure from a power storage module is introduced at a bottom of the recess, and the pressure introduction passage has a pressure introducing part which is a columnar space passing through the housing main body, and a groove which is connected to the pressure introducing part and opens to a surface of the bottom,
   the valve element is arranged so as to cover an aperture on the bottom side in the pressure introduction passage,
   the cover body has a protrusion in contact with an end face of the valve element, and
   the opening of the housing main body is closed with the cover body, whereby the protrusion of the cover body pressurizes the valve element, and the valve element airtightly closes the pressure introduction passage.
   Moreover, in the pressure regulating valve according to [1] Claim 1, the groove has a radial direction groove extending outward from a part of the pressure introducing part.
[2] The pressure regulating valve according to [1], wherein in a cross section orthogonal to an extending direction of the pressure introducing part, the shape of the pressure introducing part is circular, and
   a pair of side walls of the radial direction groove is parallel to a radial direction of the pressure introducing part, or is not parallel to a radial direction of the pressure introducing part but is formed obliquely with respect to a radial direction of the pressure introducing part.
[3] The pressure regulating valve according to [1] or [2], wherein an opening shape of the radial direction groove is a polygonal shape or a fan shape.
[4] The pressure regulating valve according to any one of [1] to [3], wherein a bottom surface of the radial direction groove is an inclined surface in which the depth of the radial direction groove gradually decreases outward from the pressure introducing part.
[5] The pressure regulating valve according to any one of [1] to [4], wherein the groove has a cross direction groove that intersects the radial direction groove.
[6] The pressure regulating valve according to [5], wherein in a cross section orthogonal to an extending direction of the pressure introducing part, the shape of the pressure introducing part is circular, and
   the cross direction groove has an arc-shaped groove formed along an arc that is a part of a concentric circle with a wall surface constituting the pressure introducing part.
[7] The pressure regulating valve according to [6], wherein an angle of the arc is 30 to 60°.
[8] The pressure regulating valve according to [7], wherein the cross direction groove has an annular shape, and a bead part having an annular shape is formed outside the cross direction groove having the annular shape.
[9] The pressure regulating valve according to [8], wherein when the bead part and the protrusion are viewed from a central axial direction of the protrusion, the entirety of the protrusion is located in an area inside the bead part having an annular shape.

The pressure regulating valve of the present invention can be opened at a desired pressure with high accuracy, and can be manufactured with a small number of man-hours.

### BRIEF DESCRIPTION OF THE DRAWINGS

FIG. 1 is a perspective view schematically showing a power storage module to which an embodiment of a pressure regulating valve of the present invention is connected.
FIG. 2 is an exploded perspective view schematically showing an embodiment of a pressure regulating valve of the present invention in an exploded manner.
FIG. 3 is an exploded perspective view schematically showing an embodiment of a pressure regulating valve of the present invention in an exploded manner.
FIG. 4 is a plan view schematically showing a housing main body in an embodiment of a pressure regulating valve of the present invention.
FIG. 5 is a plan view schematically showing a cover body in an embodiment of a pressure regulating valve of the present invention.
FIG. 6 is a cross-sectional view schematically showing a cross section from A to A in the cover body shown in FIG. 5.
FIG. 7 is a cross-sectional view schematically showing a cross section of an embodiment of a pressure regulating valve of the present invention cut in a thickness direction.
FIG. 8 is a plan view schematically showing a bottom of a recess of a housing main body in an embodiment of a pressure regulating valve of the present invention.
FIG. 9 is a plan view schematically showing a bottom of a recess of a housing main body in another embodiment of the pressure regulating valve of the present invention.
FIG. 10 is a plan view schematically showing a bottom of a recess of a housing main body in yet another embodiment of the pressure regulating valve of the present invention.
FIG. 11 is a cross-sectional view schematically showing a cross section corresponding to the cross section shown in FIG. 7 in still another embodiment of the pressure regulating valve of the present invention.
FIG.12 is a plan view schematically showing a bottom of a recess of a housing main body in yet another embodiment of the pressure regulating valve of the present invention.
FIG. 13 is a plan view schematically showing a bottom of a recess of a housing main body in yet another embodiment of the pressure regulating valve of the present invention.
FIG.14 is an explanatory diagram schematically showing a positional relation between a valve element, a protrusion, and a pressure introduction passage in an embodiment of a pressure regulating valve of the present invention in a partially transparent manner.
FIG.15 is an explanatory view schematically showing a use state in an embodiment of a pressure regulating valve of the present invention.
FIG.16 is an explanatory view schematically showing a use state in an embodiment of a pressure regulating valve of the present invention.
FIG.17 is a plan view schematically showing a bottom of a recess of a housing main body in yet another embodiment of the pressure regulating valve of the present invention.
FIG.18 is a cross-sectional view schematically showing a cross section from B to B in the housing main body shown in FIG. 17.
FIG.19 is an explanatory view schematically showing a positional relation between a valving element, a protrusion, and a pressure introduction passage in the pressure regulating valve shown in FIG. 17 in a partially transparent manner.
FIG. 20 is a cross-sectional view schematically showing a cross section corresponding to the cross section shown in FIG. 7 in a first reference example of the pressure regulating valve which is not part of the present invention.
FIG. 21 is a perspective view schematically showing the valve element constituting the pressure regulating valve shown in FIG. 20.
FIG.22 is a cross-sectional view schematically showing a cross section corresponding to the cross section shown in FIG. 7 in a second reference example of the pressure regulating valve which is not part of the present invention.
FIG.23 is a cross-sectional view schematically showing a cross section corresponding to the cross section shown in FIG. 7 in a third reference example of the pressure regulating valve which is not part of the present.
FIG.24 is a perspective view schematically showing a valve element constituting the pressure regulating valve shown in FIG. 23.

### Mode for Carrying out the Invention

Hereinafter, embodiments of the present invention will be described with reference to the drawings. It should be understood that the present invention is not limited to the following embodiments, and changes, improvements, and the like of the design can be appropriately made based on ordinary knowledge of a person skilled in the art without departing from the scope of the appended claims.

### (1) Pressure regulating valve:

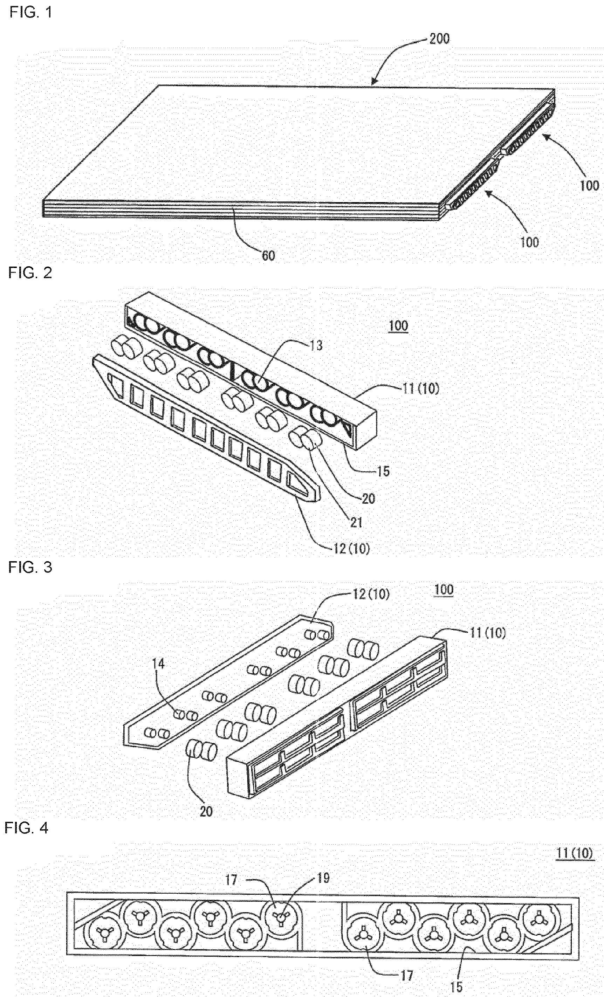

One embodiment of the pressure regulating valve of the present invention is a pressure regulating valve 100 shown in FIGs. 2 and 3. FIG. 1 shows a power storage module 200 in which two pressure regulating valves 100 are horizontally arranged side by side and connected. The power storage module 200 includes a plurality of cells 60 including a bipolar electrode having a positive electrode, a current collector and a negative electrode, and a separator, and the plurality of cells 60 are stacked in a vertical direction. The power storage module 200 is disposed in a battery (a battery stack) in a state in which a plurality of layers are stacked in a vertical direction.

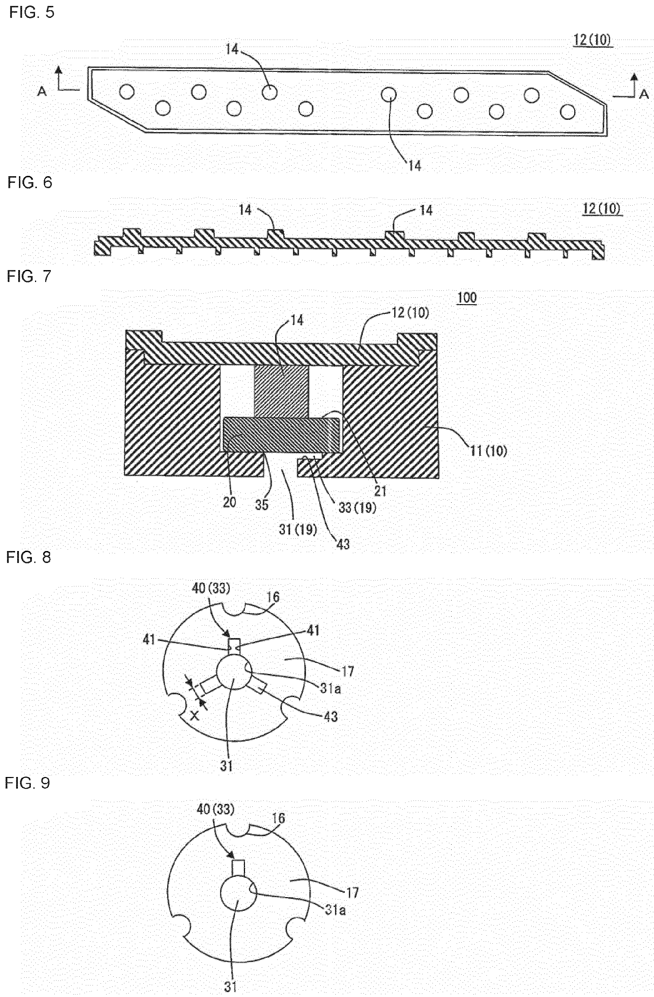

As shown in FIGs. 2 and 3, the pressure regulating valve 100 includes a housing 10 having a housing main body 11 with an opening 15 and with a recess 13 formed in the inside and a cover body 12 that closes the opening 15 of the housing main body 11, and a columnar valve element 20 that is an elastic member housed in the recess 13 of the housing main body 11 of the housing 10. As shown in FIG. 4, the housing main body 11 has a pressure introduction passage 19 formed of a through-hole into which pressure from the power storage module 200 (see FIG. 1) is introduced at a bottom 17 of the recess 13, and as shown in FIG. 7, the pressure introduction passage 19 has a pressure introducing part 31 which is a columnar space passing through the housing main body 11, and a groove 33 which is connected to the pressure introducing part 31 and opens to the surface of the bottom 17. Further, as shown in FIG. 7, the valve element 20 is arranged so as to cover an aperture 35 on the bottom 17 side in the pressure introduction passage 19. Further, as shown in FIGs. 5 and 6, the cover body 12 has a protrusion 14 in contact with an end face of the valve element 20. The pressure regulating valve 100 is a pressure regulating valve for a power storage module in which the opening 15 of the housing main body 11 is closed with the cover body 12, whereby the protrusion 14 of the cover body 12 pressurizes the valve element 20, and the valve element 20 airtightly closes the pressure introduction passage 19. FIG. 6 is a cross-sectional view schematically showing a cross section from A to A of the cover body shown in FIG. 5.

Such a pressure regulating valve 100 can be operated (that is, be opened) at a desired pressure with high accuracy, and can be manufactured with a small number of man-hours.

Specifically, first, the pressure regulating valve 100 determines whether or not to open the valve according to the magnitude of the pressure when the pressure is applied. Here, it is important to control how much pressure is applied to open the valve. It is more important to accurately adjust the pressure for opening the valve, and there is room for further improvement in the conventional pressure regulating valve as described in Patent Document 2.

That is, in the conventional pressure regulating valve as described in Patent Document 2, the function as a regulating valve is largely based on the elastic property (that is, a spring element) of an elastic member, and in manufacturing the elastic member, the variation in the hardness has a great influence. Furthermore, the function as a regulating valve of the conventional pressure regulating valve is susceptible to settling and aging deterioration of the elastic member. That is, although the pressure regulating valve is required to be opened when a desired pressure is applied as described above, in the conventional pressure regulating valve, it is not easy to open the valve at a desired pressure with high accuracy due to the above-described elements.

Further, in the conventional pressure regulating valve as described in Patent Document 2, the axial length of the elastic member constituting the pressure regulating valve needs to be provided to a certain extent, and there is a tendency that the manufacturing method is limited and much manufacturing process is required (that is, it is difficult to manufacture at low cost).

Therefore, by adopting the configuration of the pressure regulating valve of the present invention, it is possible to suppress a variation in the pressure for opening the valve due to the valve element 20 being an elastic member, and further, by providing a groove 33, it is possible to open the valve more accurately in accordance with the applied pressure. Furthermore, by using an elastic member that satisfies a desired size, it is possible to collectively manufacture and to reduce the number of man-hours. As a result, it can be manufactured at low cost.

### (1-1) Housing:

As shown in FIGs. 2 and 3, the housing 10 has a housing main body 11 with an opening 15 and with a recess 13 formed in the inside, and a cover body 12 that closes the opening 15 of the housing main body 11. Such a housing 10 is connected to a power storage module 200 (see FIG. 1) and communicates with the inside of the power storage module 200 via a pressure introduction passage 19 which is a through-hole formed in the bottom 17 of the recess 13.

The shape of the housing 10 is not particularly limited, and may be a substantially quadrangular prism shape.

The size of the housing 10 is not particularly limited, and can be appropriately set in relation to the size of the power storage module.

### (1-1-1) Housing main body:

The housing main body 11 has a box shape having an opening 15, and has a recess 13 formed in the inside. A bottom 17 of the recess 13 has a pressure introduction passage 19 formed of a through-hole into which the pressure from the power storage module 200 is introduced. The housing main body 11 may be, for example, a polygonal prism that is hollow inside and lacks one of the side walls to form an opening 15.

The material of the housing main body 11 is not particularly limited, and may be, for example, a synthetic resin or the like.

The shape of the housing main body 11 is not particularly limited, and may be, for example, a quadrangular prism shape, a hexagonal prism shape, or the like.

### (1-1-1a) Recess:

As shown in FIG. 7, the recess 13 is a bottomed hole extending in the depth direction of the housing main body 11 having a box shape, and has a pressure introduction passage 19 formed of a through-hole into which pressure from the power storage module 200 is introduced at a bottom 17 thereof. A columnar valve element 20, which is an elastic member, is housed in the recess 13, and the recess 13 can also be referred to as a space for housing the valve element 20. FIG. 7 is a cross-sectional view schematically showing a cross section of an embodiment of a pressure regulating valve of the present invention cut in a thickness direction (that is, a cross section of a pressure regulating valve having a substantially quadrangular prism shape cut along a plane orthogonal to the central axial direction (the axial direction in which the valve element 20 is arranged)).

The shape of the recess 13 is not particularly limited as long as the valve element 20 can be housed appropriately, and may be, for example, a substantially cylindrical shape. A convex part 16 may protrude from the inner wall surface of the recess 13 (see FIG. 8). By forming the convex part 16 in this manner, a gap is formed between the recess 13 and the valve element, and when the valve element 20 is opened, pressure from the power storage module 200 is released via the gap (that is, the gap becomes a flow path of the gas discharged from the power storage module 200).

The size of the recess 13 is not particularly limited, and in the case where the recess 13 is a substantially cylindrical space, the maximum outer diameter and the axial length (the length in the depth direction of the housing main body 11) in the aperture can be appropriately set.

The recess 13 may be one in one housing main body 11, or a plurality of recesses 13 may be provided as shown in FIG. 2. By providing a plurality of recesses 13 (that is, by using a plurality of valve elements 20 housed in the respective recesses 13), it is possible to cope with a case where the power storage module 200 includes a plurality of packages, and to quickly reduce the pressure from the power storage module 200.

### (1-1-1b) Pressure introduction passage:

As shown in FIGs. 7 and 8, the pressure introduction passage 19 includes a pressure introducing part 31 which is a columnar space passing through the housing main body 11, and a groove 33 which is a space that is connected to the pressure introducing part 31 and opens to the surface of the bottom 17. The pressure regulating valve 100 and the power storage module 200 communicate with each other via the pressure introduction passage 19, and when the pressure in the power storage module 200 increases, the pressure regulating valve 100 receives the same pressure. When the predetermined pressure is exceeded, the pressure regulating valve 100 is opened, and the pressure in the power storage module 200 can be lowered.

### (1-1-1b-1) Pressure introducing part:

The pressure introducing part 31 is a through-hole that communicates with the power storage module 200 (see FIG. 7). That is, the pressure introducing part 31 opens to the surface side of the housing main body 11 and also opens to the bottom 17 side of the recess 13. The outer diameter of the pressure introducing part 31 is not particularly limited, and may be the same as that of a pressure introducing part formed in a conventionally known pressure regulating valve for a power storage module.

The pressure introducing part 31 is usually a cylindrical space, but the shape is not particularly limited, and may be an elliptical columnar space or may be a polygonal (polygonal-shaped) space.

### (1-1-1b-2) Groove:

The groove 33 is a space that is connected to the pressure introducing part 31 and opens to the surface of the bottom 17 (see FIGs. 7 and 8). By providing the groove 33, the opening area of the pressure introduction passage 19 on the bottom 17 side can be made larger than the opening area of the pressure introducing part 31 on the bottom 17 side. That is, the opening area of the pressure introduction passage 19 is larger by the amount corresponding to the groove 33 as compared to the case where only the pressure introducing part 31 is formed. When the opening area of the groove 33 is appropriately adjusted, the size of the area where the valve element 20 receives pressure (the size of the pressure receiving area) can be adjusted. That is, since it is determined whether or not to open the valve according to the magnitude per unit area of the pressure received by the valve element 20, when the pressure from the power storage module 200 is constant, the timing of opening the valve can be accurately controlled by adjusting the pressure receiving area. **In** other words, it is possible to realize a desired operating pressure in the pressure regulating valve, and it is possible to obtain a highly accurate pressure regulating valve that opens when a specific pressure is applied.

As described above, the opening area of the groove 33 can be appropriately set in accordance with the condition of the power storage module 200 and the like.

The shape of the groove 33 is not particularly limited, but is preferably a shape having a radial direction groove 40 extending outward from a part of the pressure introducing part 31 as shown in FIG. 8. With the configuration having the radial direction groove 40, the valve can be opened with higher accuracy. That is, when the groove 33 extends outward from the entire circumference of the pressure introducing part 31 (when the groove 33 is formed along the entire circumference of the pressure introducing part 31), there is a concern that the valve element 20, which is an elastic member, will bend and excessively enter the groove 33 to block the pressure introducing part 31. In order to avoid this, it is conceivable to deepen the groove 33, but in this case, the condition of the valve element 20 tends to become unstable. Therefore, when the groove 33 extends outward from a part of the pressure introducing part 31 (when the groove 33 is shaped to have a radial direction groove 40), pressure can be partially introduced into the groove 33 while properly squashing the valve element 20, thus eliminating the concern described above.

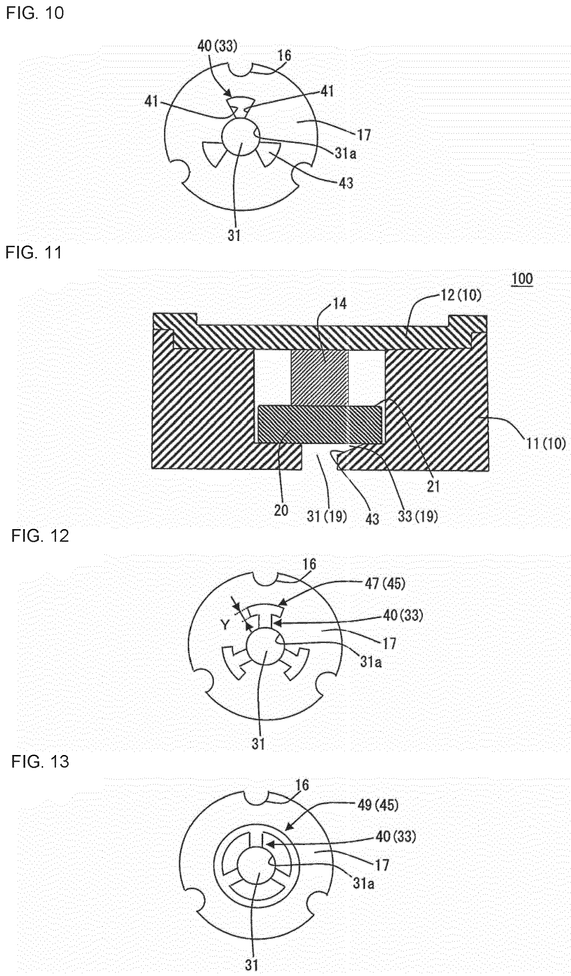

One radial direction groove 40 may be formed as shown in FIG. 9, or a plurality of radial direction grooves 40 may be formed as shown in FIGs. 8 and 10. When a plurality of radial direction grooves 40 are formed, the positional relationship thereof is not particularly limited, but may be arranged at equal intervals in the circumferential direction of the pressure introducing part 31. In this way, the pressure applied to the valve element 20 becomes uniform, and the valve element 20 can be opened at a desired timing with higher accuracy.

When a plurality of radial direction grooves 40 are formed, the number thereof is not particularly limited, and may be, for example, about 2 to 6.

The extending direction and the shape of the aperture of the radial direction groove 40 are not particularly limited as long as the radial direction groove 40 extends outward from a part of the pressure introducing part 31, and for example, the shape of the aperture may be polygonal (a polygonal shape) such as a quadrangle or a hexagon, a fan shape, a semicircular shape, a semielliptical shape, or the like. The shape of the aperture of the radial direction groove 40 refers to the shape of the closed space of the radial direction groove 40 depicted in a plan view of the bottom 17 of the recess 13 as viewed from above, for example as in FIGs. 8 to 10.

FIGs. 8 and 9 show examples in which the shape of the aperture of the radial direction groove 40 is a quadrangle, and FIG. 10 shows an example in which the shape of the aperture of the radial direction groove 40 is fan-shaped.

When the temperature in the inside of the power storage module 200 increases and the valve element 20 is exposed to a high temperature, the valve element 20 tends to soften and bite into the groove 33. When the valve element 20 is cooled in this state, the valve element 20 tends to remain bitten into the groove 33. In this case, if the pressure is applied to the valve element 20 again, the pressure required for opening the valve tends to increase due to the bite into the groove 33. In addition, the valve element 20 tends to bite extremely not only after being cooled but also at a high temperature. Therefore, there is a concern that the valve cannot be opened at a desired pressure with high accuracy. However, if the shape of the aperture of the radial direction groove 40 is fan-shaped or the like, it is possible to open the valve more accurately not only after being cooled but also at a high temperature. Incidentally, this advantage is exhibited not only when the shape of the aperture is fan-shaped, but also when the bottom surface 43 is an inclined surface as shown in FIG. 11, when the aperture is a shape (T-shaped) having the radial direction groove 40 and the cross direction groove 45 as shown in FIG. 12, and when there is an annular-shaped groove 49 (communication groove) as shown in FIG. 13.

The radial direction groove 40 is preferably formed as follows. That is, in the cross section orthogonal to the extending direction of the pressure introducing part 31, when the shape of the pressure introducing part 31 is circular, the pair of side walls 41 of the radial direction groove 40 is preferably parallel to the radial direction of the pressure introducing part 31, or not parallel to the radial direction of the pressure introducing part 31 but formed obliquely with respect to the radial direction of the pressure introducing part 31. When the pair of side walls 41 is parallel to the radial direction of the pressure introducing part 31 (when the shape of the aperture is a rectangular shape), it is easy to manage because it has only two characteristics of length and width. Further, when the pair of side walls 41 is formed obliquely with respect to the radial direction of the pressure introducing part 31, the pressure receiving area (projected area) can be increased on the outer peripheral side outside the central part while suppressing the pressure receiving area in the central part (the central part of the bottom 17) in which the valve element 20 is squashed.

For example, FIG. 8 shows a case where the shape of the pressure introducing part 31 is circular in a cross section orthogonal to the extending direction of the pressure introducing part 31, and shows an example where the pair of side walls 41 of each of the radial direction groove 40 are parallel to the radial direction of the pressure introducing part 31. FIG. 10 shows a case where the shape of the pressure introducing part 31 is circular in a cross section orthogonal to the extending direction of the pressure introducing part 31, and shows an example where the pair of side walls 41 of each of the radial direction groove 40 are not parallel to the radial direction of the pressure introducing part 31 but are formed obliquely with respect to the radial direction of the pressure introducing part 31. Although FIG. 10 shows an aspect in which the distance between the pair of side walls 41 of each of the radial direction groove 40 are spaced apart from each other toward the outside, an aspect may be adopted in which the distance toward each other are approached toward the outside.

The distance (the smallest distance) X between the pair of side walls 41 of the radial direction groove 40 is not particularly limited and can be appropriately set. When the distance X is appropriately set, the valve element 20 is less likely to bite into the radial direction groove 40, and the valve can be opened with higher accuracy.

The radial direction groove 40 may be a plane whose bottom surface 43 is parallel to the surface of the bottom 17 of the recess 13, or may be an inclined surface in which the depth of the radial direction groove 40 gradually decreases outward from the pressure introducing part 31. Here, when the bottom surface 43 is an inclined surface as described above, and for example, when the area of the radial direction groove 40 is large, such as when the shape of the aperture is fan-shaped, the degree of biting (the biting amount) of the valve element, which is an elastic member, in the radial direction groove 40 tends to be large, and thus the physical biting amount can be suppressed.

FIG. 7 shows an example in which the bottom surface 43 of the radial direction groove 40 is a plane that is parallel to the surface of the bottom 17 of the recess 13. FIG. 11 shows an example in which the bottom surface 43 of the radial direction groove 40 is an inclined surface, and the inclined surface is such that the depth of the radial direction groove 40 gradually decreases outward from the pressure introducing part 31.

As shown in FIG. 12, the groove 33 may further have an intersecting direction groove 45 that intersects the radial direction groove 40 in addition to the radial direction groove 40. When the shape of the pressure introducing part 31 is circular in a cross section orthogonal to the extending direction of the pressure introducing part 31, the intersecting direction groove 45 may have an arc-shaped groove 47 formed along an arc which is a part of a concentric circle with the wall surface 31a constituting the pressure introducing part 31. Incidentally, the groove is not limited to the arc-shaped groove 47, and a groove having a polygonal aperture may be used.

When there is a cross direction groove 45 (in particular, an arc-shaped groove 47), the valve element 20 is even less likely to bite into the radial direction groove 40, and the valve can be opened with higher accuracy. That is, although the radial direction groove 40 is less likely to be bitten by the valve element 20, when the pair of side walls 41 of the radial direction groove 40 are parallel to the radial direction of the pressure introducing part 31, for example, such as when the shape of the aperture is square, it tends to bite easily on the free end side (that is, the pressure introducing part side) of the radial direction groove 40. Therefore, by further providing the intersecting direction groove 45 intersecting with the radial direction groove 40, the force that the valve element 20 bites into the free end portion of the radial direction groove 40 is reduced, and the occurrence of biting of the valve element 20 in the part can be suppressed.

The arc-shaped groove 47 may have an angle (a center angle) of 30 to 60°. In this manner, it is possible to further suppress the occurrence of biting of the valve element 20 at the free end side of the radial direction groove 40. In the angle of the arc, "arc" refers to an arc drawn by each of the pair of side walls. That is, it is preferable that each of the arcs drawn by the pair of partition walls satisfies the range of the center angle.

In addition to the arc-shaped groove 47, the cross direction groove 45 may have an annular-shaped groove 49, which is an annular groove, as shown in FIG. 13. FIG. 13 shows an example in which each of the radial direction grooves 40 is in communication with each other by an annular-shaped groove 49, but not all of the radial direction grooves 40 may be in communication with each other. By providing the annular-shaped groove 49, it is possible to open the valve with higher accuracy. That is, as described above, there is a concern that the pressure required for opening the valve is increased due to the state in which the valve element 20 remains bitten into groove 33, but it is possible to eliminate the concern and open the valve at a desired pressure with high accuracy.

The distance Y between the pair of side walls 41 of the cross direction groove 45 is not particularly limited, and may be the same as the distance X between the pair of side walls 41 of the radial direction groove 40, for example.

### (1-1-1b-3) Bead part:

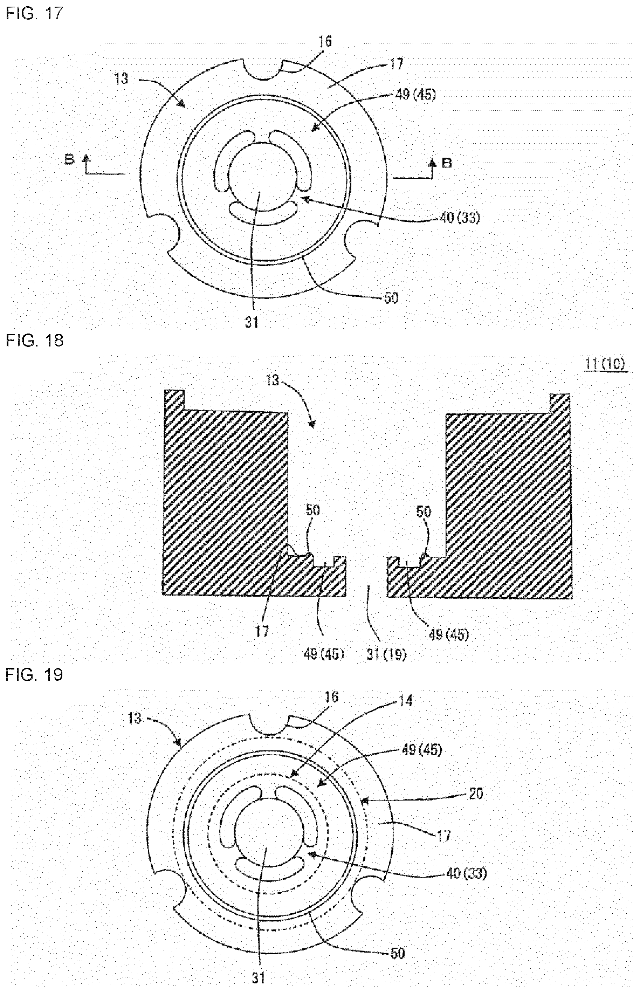

The bottom 17 of the recess 13 may be provided with a bead part 50 as shown in FIGs. 17 and 18. Specifically, as shown in FIG. 17, it may be an aspect in which the intersecting direction groove 45 has an annular shape, and a bead part 50 having an annular shape is formed outside of the intersecting direction groove 45 having an annular shape. By providing the bead part 50 in this manner, it is possible to suppress the occurrence of a state in which the valve element 20 and the bottom 17 of the recess 13 are stuck to each other, and to suppress an increase in the valve opening pressure. In particular, it is possible to suppress an increase in the valve opening pressure after left at high temperature. That is, when exposed to a high-temperature environment for a long time, the valve element 20 and the bottom 17 of the recess 13 are stuck to each other, and the valve opening pressure tends to increase. Such sticking factors include compatibility between materials (such as surface energy), temperature environment, contact area, and the like. The bead part 50 can be provided by focusing on the contact area among them. When the bead part 50 is provided, it is preferable to increase the area occupied by the groove 33 with respect to the area of the bottom 17 in order to reduce the contact area. As described above, the bead part 50 has an annular shape, and more specifically, has a continuous ring shape without any interrupted part in the middle. The shape of the bead part 50 (the shape in plan view as shown in FIG. 17) is not particularly limited as long as it is an annular shape, and may be an annular shape, an elliptical annular shape, a polygonal annular shape, or the like.

The height of the bead part 50 is not particularly limited and can be appropriately set, and the bead part 50 can have the same height at any position. In addition, as shown in FIG. 18, the height of the bead part 50 may be higher than other parts of the bottom 17.

When the bead part 50 is provided, the area occupied by the groove 33 with respect to the area of the bottom 17 can be appropriately set depending on the materials and an ambient temperature.

The shape of the bead part 50 in the cross section along the height direction is not particularly limited, and may be, for example, rectangular, trapezoidal, semicircular, and the like.

The forming position of the bead part 50 is not particularly limited as long as it is outside the cross direction groove 45, and can be appropriately determined, but the relation with the outer peripheral edge of the protrusion 14 can be as follows. That is, when the bead part 50 and the protrusion 14 are viewed from a central axial direction of the protrusion 14 (see FIG. 19), the entirety of the protrusion 14 may be located in an area inside the bead part 50 having an annular shape. In this way, an increase in the valve opening pressure can be suppressed more reliably.

In FIG. 19, the bead part 50 is formed at the outer edge of the cross direction groove 45, and when the bead part is formed at such a position, a decrease in the valve opening pressure can be suppressed. That is, in order to suppress the adhesion, it is necessary to minimize the contact area of the valve element made of rubber, but in this case, the pressure receiving area increases, and the valve opening pressure tends to decrease. Therefore, by providing the bead part at the outer edge, the flexural amount of the valve element, which is rubber, is increased, and as a result, a decrease in the valve opening pressure can be suppressed.

### (1-1-2) Cover body:

A cover body 12 closes an opening 15 of a housing main body 11, and has a protrusion 14 in contact with an end face 21 of a valve element 20 (see FIGs. 5 and 6). The cover body 12 is fixed to the housing main body 11 by welding or the like with the opening 15 of the housing main body 11. A pressure discharge hole is formed in the cover body 12, and when the pressure increases in the pressure regulating valve 100, the gas in the pressure regulating valve 100 is discharged from the pressure discharge hole, and the pressure in the pressure regulating valve 100 decreases.

The material of the cover body 12 is not particularly limited, and the same material as the material of the housing main body 11 can be used as appropriate, and for example, a synthetic resin or the like can be used.

### (1-1-2a) Protrusion:

As shown in FIG. 7, a protrusion 14 is in contact with an end face 21 of a valve element 20, and pressurizes the valve element 20 by closing an opening 15 of the housing main body 11 with the cover body 12. The valve element 20 airtightly closes the pressure introduction passage 19.

The shape or the dimension of the protrusion 14 is not particularly limited as long as the valve element 20 can be pressurized by closing the opening 15 of the housing main body 11 with the cover body 12, and the protrusion 14 may have, for example, a cylindrical shape, an elliptical cylindrical shape, a polygonal cylindrical shape, or the like.

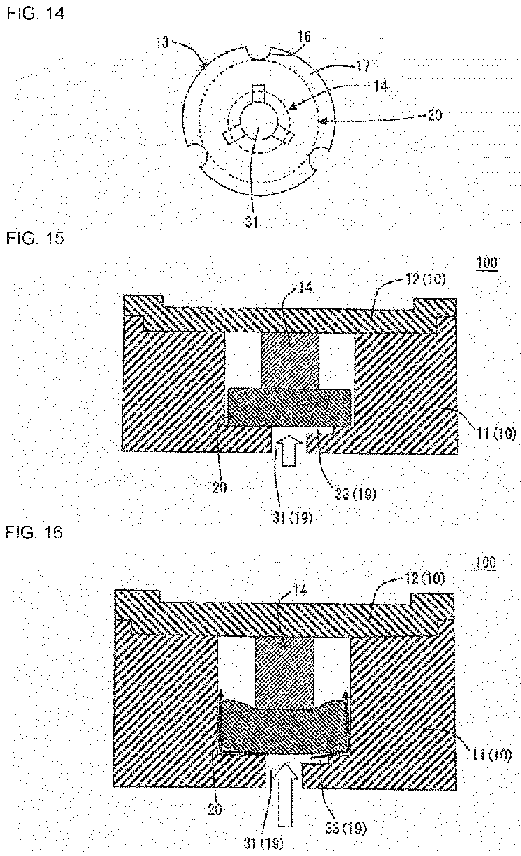

The protrusion 14 may be sized such that the top surface in contact with the valve element 20 does not cover the entire aperture on the bottom 17 side of the recess 13 in the pressure introduction passage 19. That is, as shown in FIG. 14, when the positional relation between an outer edge A of the top surface of the protrusion 14 and an outer edge B of the aperture on the bottom 17 side of the recess 13 in the pressure introduction passage 19 is viewed from an axial direction of the protrusion 14, it is preferable that at least a part of the outer edge B is located outside the outer edge A. That is, it is preferable that the outer edge B protrudes from the outer edge A. In this way, by setting the pressure introduction passage 19 to protrude outward from the diameter (cross-sectional area) of the protrusion 14, the effect on the valve opening pressure is reduced even when the amount of squashing of the valve element 20 by the protrusion 14 is increased due to the dimensional variation or the like.

The height of the protrusion 14 can be appropriately set based on the relation with the thickness of the valve element 20 and the like. By adjusting the height of the protrusion 14, the valve element 20 can be satisfactorily pressurized when the opening 15 of the housing main body 11 is closed by the cover body 12, and the pressure introduction passage 19 can be airtightly closed by the valve element 20.

### (1-2) Valve element:

The valve element 20 has a columnar shape that is an elastic member housed in the recess 13 of the housing main body 11 in the housing 10. The valve element 20 is disposed so as to cover an aperture on the bottom 17 side of the recess 13 in the pressure introduction passage 19. Furthermore, the axial length of the valve element 20 is shorter than the outer diameter thereof. By closing the aperture of the pressure introduction passage 19 by the valve element 20, even after the pressure regulating valve 100 is communicated with the power storage module 200, the airtight state of the pressure introduction passage 19 is maintained until the inside of the power storage module 200 reaches a desired pressure. Then, when the pressure in the power storage module 200 rises to a desired value, the valve element 20 is separated from the bottom 17 of the recess 13 to generate a gap between the valve element 20 and the bottom 17 of the recess 13, and the compressed gas in the power storage module 200 is introduced from the power storage module 200 into the pressure regulating valve 100 through the gap to reduce the pressure in the power storage module 200. After the pressure drop in the power storage module 200, the valve element 20 returns to its original position by the elastic force of the valve element 20, and comes into contact with the bottom 17 of the recess 13 to airtightly close the pressure introduction passage 19.

The material of the valve element is not particularly limited as long as it is an elastic member, and examples thereof include rubbers.

As described above, the axial length of the valve element 20 is shorter than the outer diameter thereof. In this way, it is possible to avoid variation in the valve opening pressure due to the axial length of the valve element 20 as in the conventional pressure regulating valve as disclosed in Patent Document 2. That is, the valve element of the conventional pressure regulating valve is longer than the depth of the recess for housing the valve element, and with such a length, when the valve element is housed in the recess, the valve element exerts its elastic force and closes the pressure introduction passage 19 airtightly. However, the longer the valve element, the more variation occurs in the elastic force due to the manufacturing accuracy thereof. Therefore, there is a tendency that the valve opening operation is not performed in spite of receiving a desired pressure to be opened from the inside of the power storage module 200. Then, as in the present invention, since the outer diameter of the valve element is smaller than the axial length thereof, it is possible to suppress the variation in the valve opening operation due to the length of the valve element.

The valve element 20 has a columnar shape as shown in FIGs. 2, 3, and 7, but as described above, the axial length is shorter than the outer diameter, and the "columnar shape" can also be referred to as a plate shape or a disk shape. More specifically, the valve element 20 may have a substantially disk shape or the like.

### (2) Using method of Pressure regulating valve:

The pressure regulating valve 100, which is an embodiment of the pressure regulating valve of the present invention, can be used, for example, as follows. First, the pressure regulating valve 100 is connected and fixed to the power storage module 200 (see FIG. 1), and the inside of the pressure regulating valve 100 and the inside of the power storage module 200 communicate with each other via the pressure introduction passage 19.

When the power storage module 200 is used, hydrogen may be generated in the battery in, for example, a nickel metal hydride battery due to overdischarge or the like, which may increase the pressure inside the battery. In this case, as shown in FIG. 15, the pressure in the pressure regulating valve 100 (the pressure introduction passage 19) also increases. When the pressure in the pressure regulating valve 100 (the pressure introduction passage 19) exceeds a predetermined pressure, the valve opening operation is performed by the pressure. That is, as shown in FIG. 16, the valve element 20 of the pressure regulating valve 100 is separated from the bottom 17 of the recess 13 to generate a gap between the valve element 20 and the bottom 17 of the recess 13. The compressed gas (indicated by black arrows) in the power storage module 200 are introduced into the pressure regulating valve 100 through the gap. When the compressed gas is introduced into the pressure regulating valve 100 in this manner, the pressure in the power storage module 200 decreases, and a situation in which the power storage module 200 is damaged can be avoided. The compressed gas introduced into the pressure regulating valve 100 passes through the recess 13 and is discharged from the discharge hole of the cover body 12.

The timing of the start of the valve opening operation of the valve element 20 is determined by the magnitude of the pressure received by the valve element 20 from the compressed gas in the power storage module 200. That is, the valve opening operation is designed to be performed when the pressure per unit area received by the valve element 20 is equal to or greater than a predetermined value. In the present invention, the groove 33 is formed and the aperture area thereof is adjusted to adjust the magnitude of the pressure per unit area received by the valve element 20. At this time, by setting the valve element 20 to a predetermined dimension, the influence of the variation in the elastic force due to the manufacturing error or the like of the valve element 20 made of an elastic material is reduced.

Incidentally, by setting the valve element 20 to a predetermined dimension, the cost per unit of the valve element 20 can be reduced, and the cost in replacement can be reduced.

### (3) Reference examples of Pressure regulating valve which is not part of the present invention:

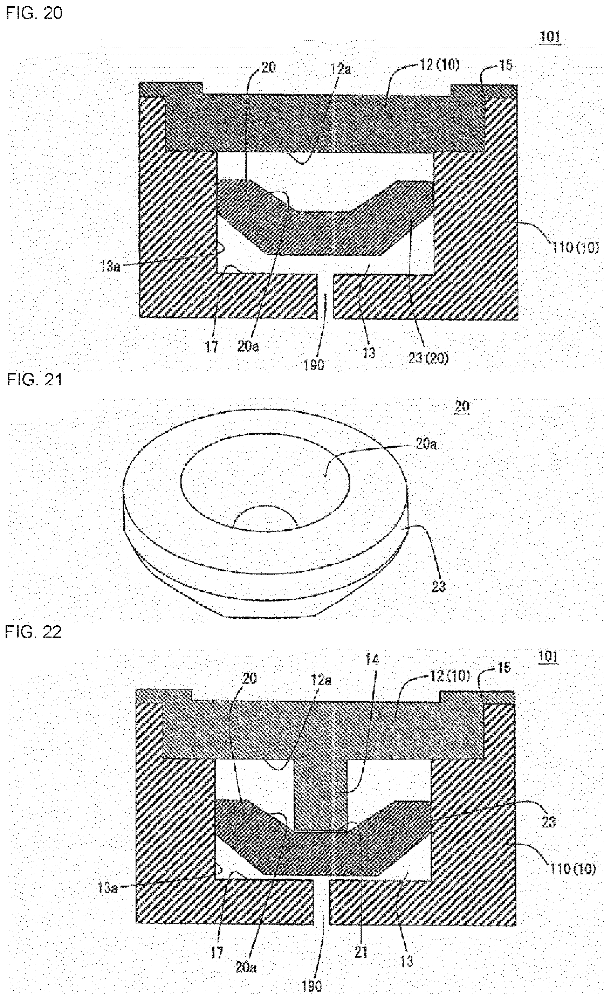

A first reference example of the pressure regulating valve may include a pressure regulating valve 101 shown in FIG. 20. The pressure regulating valve 101 includes a housing 10 having a housing main body 110 with an opening 15 and with a recess 13 formed in the inside and a cover body 12 that closes the opening 15 of the housing main body 110, and a disk-shaped valve element 20 that is an elastic member housed in the recess 13 of the housing main body 110 of the housing 10. The housing main body 110 has a pressure introduction passage 190 formed of a through-hole into which pressure from the power storage module is introduced at a bottom 17 of the recess 13. The length in the thickness direction of the valve element 20 is shorter than the depth of the recess 13 and the thickness is smaller than the outer diameter, and the valve element 20 has a lip part 23 which is in contact with the inner wall surface 13a of the recess 13 of the housing main body 110 to form a sealing structure. The pressure regulating valve 101 is for a power storage module in which the valve element 20 makes the inside of the recess 13 airtight.

The "depth of the recess" means the height of the inner wall surface of the recess (the axial length of the recess) having the inner wall surface and the bottom. Therefore, for example, when the bottom of the recess is tapered, the boundary between the inner wall surface and the bottom is the "depth of the recess".

Such a pressure regulating valve 101 can operate at a desired pressure with high accuracy (that is, can operate to reduce the pressure in the power storage module), and can be manufactured with a small number of man-hours.

Specifically, first, the pressure regulating valve 101 determines whether or not to operate according to the magnitude of the pressure when the pressure is applied. Here, it is important to control how much pressure is applied to operate. It is more important to accurately adjust the pressure to operate, and there is room for further improvement in the conventional pressure regulating valve as described in Patent Document 2.

That is, in the conventional pressure regulating valve as described in Patent Document 2, the function as a regulating valve is largely based on the elastic property (that is, a spring element) of an elastic member, and in manufacturing the elastic member, the variation in the hardness has a great influence. Furthermore, the function as a regulating valve of the conventional pressure regulating valve is susceptible to settling and aging deterioration of the elastic member. That is, although the pressure regulating valve is required to be operated when a desired pressure is applied as described above, in a conventional pressure regulating valve, it is not easy to operate the pressure regulating valve at a desired pressure with high accuracy due to the above-described elements.

Further, in the conventional pressure regulating valve as described in Patent Document 2, the axial length of the elastic member constituting the pressure regulating valve needs to be provided to a certain extent, and there is a tendency that the manufacturing method is limited and much manufacturing process is required (that is, it is difficult to manufacture at low cost).

Further, a rubber with a lip is known as a pressure regulating valve (for example, JP-A-2020-102541 and JP-A-2006-156868). However, in JP-A-2020-102541, there is a concern that characteristics change due to an angle of a mating surface (a valve seat) in which a lip part is in contact, eccentricity of a valve element which is rubber, or the like. Further, in JP-A-2006-156868, there is a concern that the contact state of the lip part (the seal lip) becomes unstable due to the influence of dimensional variation and the like of the positioning rubber.

Therefore, by adopting the configuration of the pressure regulating valve of the first reference example, it is possible to suppress a variation in the pressure for operating due to the valve element 20 being an elastic member, and to accurately operate in accordance with the applied pressure. Furthermore, by using an elastic member that satisfies a desired size, it is possible to collectively manufacture and to reduce the number of man-hours. As a result, it can be manufactured at low cost. Further, as described above, while there is the above-described concern in JP-A-2020-102541, in the first reference example, the surface in which a valve element is in contact is only the outer periphery, and the valve element that is an elastic member has a function of aligning with each other, so that the valve opening pressure can be expected to be stabilized. Further, while there is the above-described concern in JP-A-2006-156868, the first reference example does not require compression for positioning, so that the above-described concern can be reduced.

### (3-1) Housing:

As shown in FIG. 20, the housing 10 has a housing main body 110 with an opening 15 and with a recess 13 formed in the inside, and a cover body 12 that closes the opening 15 of the housing main body 110. Such a housing 10 is connected to a power storage module 200 (see FIG. 1) and communicates with the inside of the power storage module 200 via a pressure introduction passage 190 which is a through-hole formed in the bottom 17 of the recess 13.

The shape of the housing 10 is not particularly limited, and may be a substantially quadrangular prism shape or the like, similarly to the pressure regulating valve 100 described above.

The size of the housing 10 is not particularly limited, and can be appropriately set in relation to the size of the power storage module.

### (3-1-1) Housing main body:

As shown in FIG. 20, the housing main body 110 has a box shape having an opening 15, and has a recess 13 formed in the inside. A bottom 17 of the recess 13 has a pressure introduction passage 190 formed of a through-hole into which the pressure from the power storage module 200 is introduced. The housing main body 110 may be, for example, a polygonal prism that is hollow inside and lacks one of the side walls to form an opening 15.

The material of the housing main body 110 is not particularly limited, and may be, for example, a synthetic resin or the like.

The shape of the housing main body 110 is not particularly limited, and may be, for example, a quadrangular prism shape, a hexagonal prism shape, or the like.

### (3-1-1a) Recess:

As shown in FIG. 20, the recess 13 is a bottomed hole extending in the depth direction of the housing main body 110 having a box shape, and has a pressure introduction passage 190 formed of a through-hole into which pressure from the power storage module 200 is introduced at a bottom 17 thereof. A disk-shaped valve element 20, which is an elastic member, is housed in the recess 13, and the recess 13 may be referred to as a space for housing the valve element 20.

The shape of the recess 13 is not particularly limited as long as the valve element 20 can be housed appropriately, and may be, for example, a substantially cylindrical shape shape.

The size of the recess 13 is not particularly limited, and in the case where the recess 13 is a substantially cylindrical space, the maximum outer diameter and the axial length (the length in the depth direction of the housing main body 110) in the aperture can be appropriately set.

The recess 13 may be one in one housing main body 110, or a plurality of recesses 13 may be provided. By providing a plurality of recesses 13 (that is, by using a plurality of valve elements 20 housed in the respective recesses 13), it is possible to cope with a case where the power storage module 200 includes a plurality of packages, and to quickly reduce the pressure from the power storage module 200.

### (3-1-1b) Pressure introduction passage:

As shown in FIG. 20, a pressure introduction passage 190 is a through-hole formed in the bottom 17 of the recess 13 and into which the pressure from the power storage module is introduced. The pressure regulating valve 101 and the power storage module 200 communicate with each other via the pressure introduction passage 190, and when the pressure in the power storage module 200 increases, the pressure regulating valve 101 receives the same pressure. When the predetermined pressure is exceeded, the pressure regulating valve 101 is activated, and the pressure in the power storage module 200 can be lowered.

### (3-1-2) Cover body:

A cover body 12 closes an opening 15 of a housing main body 110 (see FIG. 20). The cover body 12 is fixed to the housing main body 110 by welding or the like with the opening 15 of the housing main body 110. A pressure discharge hole is formed in the cover body 12, and when the pressure increases in the pressure regulating valve 101, the gas in the pressure regulating valve 101 is discharged from the pressure discharge hole, and the pressure in the pressure regulating valve 101 decreases.

The material of the cover body 12 is not particularly limited, and the same material as the material of the housing main body 11 can be used as appropriate, and for example, a synthetic resin or the like can be used.

### (3-1-2a) Protrusion:

As shown in FIG. 22 as a second reference example, the cover body 12 may have a protrusion 14 in contact with an end face 21 of the valve element 20. By providing a depression 20a in the end face of the valve element 20, the depression and the protrusion 14 can be engaged with each other to provide the valve element 20 with a function of positioning. Note that the part of the protrusion 14 that is in contact with the valve element 20 does not correspond to the back surface 12a of the cover body 12.

The shape and the dimension of the protrusion 14 are not particularly limited, and the protrusion 14 may have, for example, a cylindrical shape, an elliptical cylindrical shape, a polygonal cylindrical shape, or the like.

The height of the protrusion 14 can be appropriately set based on the relation with the thickness of the valve element 20 and the like. In this way, it is possible to satisfactorily prevent the position of the valve element 20 from being displaced when the opening 15 of the housing main body 110 is closed by the cover body 12.

### (3-2) Valve element:

As shown in FIG. 21, a valve element 20 has a disk-like shape that is an elastic member housed in a recess 13 of a housing main body 110 of a housing 10. The length of the valve element 20 in the thickness direction is shorter than the depth of the recess 13 and the thickness is smaller than the outer diameter. By making the recess 13 airtight by the valve element 20, even after the pressure regulating valve 101 is communicated with the power storage module 200, the airtight state of the pressure introduction passage 190 is maintained until the inside of the power storage module 200 reaches a desired pressure. Then, when the pressure in the power storage module 200 rises to a desired value, a lip part 23 of the valve element 20 is deformed, a gap is generated between the lip part 23 and the inner wall surface 13a of the recess 13, and the airtightness is not attained. As a result, the pressure in the power storage module 200 is reduced. When the protrusion 14 is provided in the cover body 12, the valve element 20 returns to its original position by the elastic force of the valve element 20 after the pressure drop in the power storage module 200. The depth of the recess 13 refers to the width (axial length) of the side surface of the recess 13.

As described above, the length of the valve element 20 in the thickness direction is shorter than the depth of the recess 13, and by adopting such a configuration, it is with higher accuracy possible to reduce the variation in manufacturing and to operate at a desired pressure with higher accuracy.

Further, with the configuration of the valve element 20 as described above, it is possible to avoid the variation in the operating pressure due to the axial length of the valve element 20 as in the conventional pressure regulating valve as disclosed in Patent Document 2. That is, the valve element of the conventional pressure regulating valve is longer than the depth of the recess for housing the valve element, and by making such a length, the valve element exerts its elastic force and closes the pressure introduction passage 190 airtightly when being housed in the recess. However, the longer the valve element, the more variation occurs in the elastic force due to the manufacturing accuracy thereof. Therefore, there is a tendency that the valve does not operate in spite of receiving a desired pressure to be operated from the power storage module 200. Therefore, as in the first reference example, by reducing the thickness of the valve element as compared with the outer diameter thereof, it is possible to suppress the variation in the timing of the start of the operation due to the length of the valve element.

The material of the valve element is not particularly limited as long as it is an elastic member, and examples thereof include rubbers.

Although the valve element 20 has a columnar shape, as described above, since the length in the thickness direction is smaller than the outer diameter, the "columnar shape" may be referred to as a plate shape or a disk shape. More specifically, the valve element 20 may have a substantially disk shape or the like.

Since the length of the valve element 20 in the thickness direction is shorter than the depth of the recess 13, as shown in FIG. 20, the valve element can be spaced apart from the back surface 12a of the cover body 12. When the valve element is spaced apart from the back surface 12a of the cover body 12 in this manner, since it is not in contact with the cover body 12, there is no need to provide a groove in the mating part (cover body 12), and the structural simplification can be achieved. Further, since the upper and lower restraints can be minimized, the operation of the valve element 20 is not hindered.

### (3-2a) Lip part:

A lip part 23 is in contact with an inner wall surface 13a of the recess 13 of the housing main body 110 to form a sealing structure. Such a lip part 23 may have a structure similar to that of a lip part used in a conventionally known sealing structure.

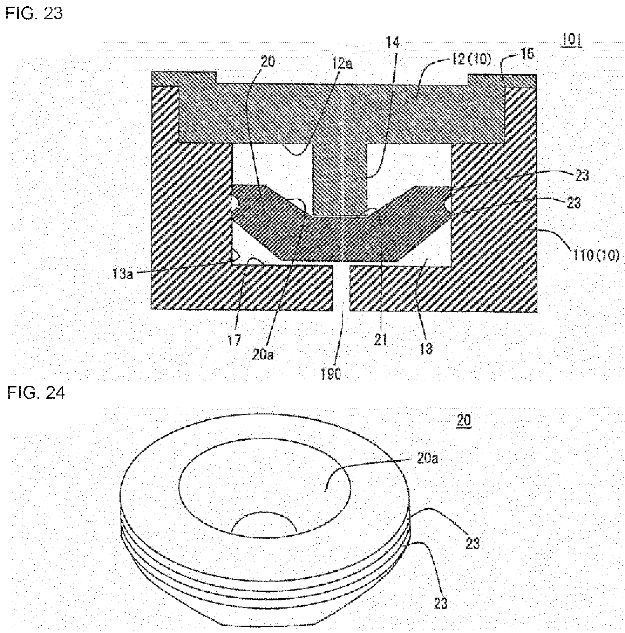

As shown in FIGs. 23 and 24 as a third reference example, the lip part 23 may be formed in two stages such that two ring-shaped protrusions are adjacent to each other. In this way, the valve element 20 can further ensure the airtight state of the recess 13. FIG. 23 is a cross-sectional view schematically showing a cross section corresponding to a cross section shown in FIG. 7 in a third reference example of the pressure regulating valve. FIG. 24 is a perspective view schematically showing the valve element 20 constituting the pressure regulating valve 101 shown in FIG. 23.

### (4) Using method of Pressure regulating valve:

The pressure regulating valve 101, which is the first, second or third reference example of the pressure regulating valve, can be used, for example, as follows. First, the pressure regulating valve 101 is connected and fixed to the power storage module 200, and the inside of the pressure regulating valve 101 and the inside of the power storage module 200 communicate with each other via the pressure introduction passage 190.

When the power storage module 200 is used, hydrogen may be generated in the battery in, for example, a nickel metal hydride battery due to overdischarge or the like, which may increase the pressure inside the battery. In this case, the pressure in the pressure regulating valve 101 (the pressure introduction passage 190) also increases. When the pressure in the pressure regulating valve 101 (the pressure introduction passage 190) exceeds a predetermined pressure, pressure reducing operation is performed by the pressure. That is, a gap is formed between the lip part 23 of the valve element 20 and the side surface of the recess 13. As a result, it is possible to avoid a situation in which the compressed gas in the power storage module 200 is introduced to the outside of the pressure regulating valve 101, the pressure in the power storage module 200 is lowered, and the power storage module 200 is damaged.

The timing of the start of the pressure reducing operation of the valve element 20 is determined by the magnitude of the pressure received by the valve element 20 from the compressed gas in the power storage module 200. That is, the pressure reducing operation is designed to be performed when the pressure per unit area received by the valve element 20 becomes a value equal to or greater than a predetermined value. In the first to third reference examples, the valve element 20 is set to a predetermined dimension (the length in the thickness direction is shortened so as to be spaced apart from the cover body 12), thereby reducing the influence of the variation in the elastic force due to the manufacturing error or the like of the valve element 20 made of an elastic material, and controlling the timing of the start of the pressure reducing operation with higher accuracy.

Incidentally, by setting the valve element 20 to a predetermined size, it is possible to reduce the cost per unit of the valve element 20, and the cost in replacement can be reduced.

### Industrial applicability

The pressure regulating valve of the present invention can be used as a pressure regulating valve used in a power storage module used in a vehicle or the like.

### Description of Reference numerals

10: housing
11,110: housing main body
12: cover body
12a: back surface
13: recess
13a: inner wall surface
14: protrusion
15: opening
16: convex part
17: bottom
19,190: pressure introduction passage
20: valve element
20a: depression
21: end face
23: lip part
31: pressure introducing part
31a: wall surface
33: groove
35: aperture
40: radial direction groove
41: side wall
43: bottom surface
45: cross direction groove
47: arc-shaped groove
49: annular-shaped groove
50: bead part
60: cell
100,101: pressure regulating valve
200: power storage module

## Claims

1. A pressure regulating valve (100) for a power storage module, comprising:
a housing (10) having a housing main body (11) with an opening (15) and with a recess (13) formed in the inside and a cover body (12) that closes the opening (15) of the housing main body (11); and
a columnar valve element (20) that is an elastic member housed in the recess (13) of the housing main body (11) of the housing (10),
wherein
the housing main body (11) has a pressure introduction passage (19) formed of a through-hole into which pressure from a power storage module is introduced at a bottom (17) of the recess (13), and the pressure introduction passage (19) has a pressure introducing part (31) which is a columnar space passing through the housing main body (11), and a groove (33) which is connected to the pressure introducing part (31) and opens to a surface of the bottom (17),
the valve element (20) is arranged so as to cover an aperture (35) on the bottom (17) side in the pressure introduction passage (19),
the cover body (12) has a protrusion (14) in contact with an end face of the valve element (20), and
the pressure regulating valve (100) is configured such that the opening (15) of the housing main body (11) is closed with the cover body (12), whereby the protrusion (14) of the cover body (12) pressurizes the valve element (20), and the valve element (20) airtightly closes the pressure introduction passage (19),
**characterized in that**
the groove (33) has a radial direction groove (40) extending outward from a part of the pressure introducing part (31).

2. The pressure regulating valve (100) according to claim 1, wherein,
in a cross section orthogonal to the extending direction of the pressure introducing part (31), the shape of the pressure introducing part (31) is circular, and
a pair of side walls (41) of the radial direction groove (40) is parallel to a radial direction of the pressure introducing part (31), or is not parallel to a radial direction of the pressure introducing part (31) but is formed obliquely with respect to a radial direction of the pressure introducing part (31).

3. The pressure regulating valve (100) according to any one of claims 1 and 2, wherein
an opening shape of the radial direction groove (40) is a polygonal shape or a fan shape.

4. The pressure regulating valve (100) according to any one of claims 1 to 3, wherein
a bottom surface (43) of the radial direction groove (40) is an inclined surface in which the depth of the radial direction groove (40) gradually decreases outward from the pressure introducing part (31).

5. The pressure regulating valve (100) according to any one of claims 1 to 4, wherein
the groove (33) has a cross direction groove (45) that intersects the radial direction groove (40).

6. The pressure regulating valve according to claim 5, wherein,
in a cross section orthogonal to an extending direction of the pressure introducing part (31), the shape of the pressure introducing part (31) is circular, and
the cross direction groove (45) has an arc-shaped groove (47) formed along an arc that is a part of a concentric circle with a wall surface (31a) constituting the pressure introducing part (31).

7. The pressure regulating valve (100) according to claim 6, wherein
an angle of the arc is 30 to 60°.

8. The pressure regulating valve (100) according to claim 5, wherein
the cross direction groove (49) has an annular shape, and a bead part (50) having an annular shape is formed outside the cross direction groove (49) having the annular shape.

9. The pressure regulating valve (100) according to claim 8, wherein,
when the bead part (50) and the protrusion (14) are viewed from a central axial direction of the protrusion (14), the entirety of the protrusion (14) is located in an area inside the bead part (50) having an annular shape.

## Patentansprüche

1. Druckregelventil (100) für ein Energiespeichermodul, das aufweist:
ein Gehäuse (10), das einen Gehäusehauptkörper (11) mit einer Öffnung (15) und mit einer im Inneren ausgebildeten Aussparung (13), und einen Abdeckkörper (12) aufweist, der die Öffnung (15) des Gehäusehauptkörpers (11) verschließt; und
ein säulenförmiges Ventilelement (20), das ein elastisches Element ist, das in der Aussparung (13) des Gehäusehauptkörpers (11) des Gehäuses (10) untergebracht ist,
wobei
der Gehäusehauptkörper (11) einen Druckeinleitungskanal (19) aufweist, der aus einem Durchgangsloch ausgebildet ist, in das Druck von einem Energiespeichermodul an einem Boden (17) der Aussparung (13) eingeleitet wird, und der Druckeinleitungskanal (19) einen Druckeinleitungsteil (31), der ein säulenförmiger Raum ist, der durch den Gehäusehauptkörper (11) hindurchgeht, und eine Nut (33) aufweist, die mit dem Druckeinleitungsteil (31) verbunden ist und sich zu einer Oberfläche des Bodens (17) öffnet,
das Ventilelement (20) so angeordnet ist, dass es eine Öffnung (35) auf der Seite des Bodens (17) im Druckeinleitungskanal (19) abdeckt,
der Abdeckkörper (12) einen Vorsprung (14) aufweist, der in Kontakt mit einer Endfläche des Ventilelements (20) steht, und
das Druckregelventil (100) so ausgebildet ist, dass die Öffnung (15) des Gehäusehauptkörpers (11) mit dem Abdeckkörper (12) verschlossen ist,
wodurch der Vorsprung (14) des Abdeckkörpers (12) das Ventilelement (20) mit Druck beaufschlagt und das Ventilelement (20) den Druckeinleitungskanal (19) luftdicht verschließt,
**dadurch gekennzeichnet, dass**
die Nut (33) eine Radialrichtungsnut (40) aufweist, die sich von einem Teil des Druckeinleitungsteils (31) nach außen erstreckt.

2. Druckregelventil (100) nach Anspruch 1, wobei,
in einem Querschnitt orthogonal zur Erstreckungsrichtung des Druckeinleitungsteils (31) die Form des Druckeinleitungsteils (31) kreisförmig ist, und
ein Paar von Seitenwänden (41) der Radialrichtungsnut (40) parallel zu einer Radialrichtung des Druckeinleitungsteils (31) ist, oder nicht parallel zu einer Radialrichtung des Druckeinleitungsteils (31) ist, sondern schräg in Bezug auf eine Radialrichtung des Druckeinleitungsteils (31) ausgebildet ist.

3. Druckregelventil (100) nach einem der Ansprüche 1 und 2, wobei
eine Öffnungsform der Radialrichtungsnut (40) eine polygonale Form oder eine Fächerform ist.

4. Druckregelventil (100) nach einem der Ansprüche 1 bis 3, wobei
eine Bodenfläche (43) der Radialrichtungsnut (40) eine geneigte Fläche ist, in der die Tiefe der Radialrichtungsnut (40) allmählich nach außen von dem Druckeinleitungsteil (31) abnimmt.

5. Druckregelventil (100) nach einem der Ansprüche 1 bis 4, wobei
die Nut (33) eine Querrichtungsnut (45) aufweist, die die Radialrichtungsnut (40) schneidet.

6. Druckregelventil nach Anspruch 5, wobei,
in einem Querschnitt orthogonal zu einer Erstreckungsrichtung des Druckeinleitungsteils (31) die Form des Druckeinleitungsteils (31) kreisförmig ist, und
die Querrichtungsnut (45) eine bogenförmige Nut (47) aufweist, die entlang eines Bogens ausgebildet ist, der ein Teil eines konzentrischen Kreises mit einer Wandfläche (31a) ist, die den Druckeinleitungsteil (31) bildet.

7. Druckregelventil (100) nach Anspruch 6, wobei
ein Winkel des Bogens 30 bis 60° beträgt.

8. Druckregelventil (100) nach Anspruch 5, wobei
die Querrichtungsnut (49) eine Ringform hat und ein Wulstteil (50) mit einer Ringform außerhalb der Querrichtungsnut (49) mit der Ringform ausgebildet ist.

9. Druckregelventil (100) nach Anspruch 8, wobei,
wenn der Wulstteil (50) und der Vorsprung (14) von einer zentralen axialen Richtung des Vorsprungs (14) aus betrachtet werden, die Gesamtheit des Vorsprungs (14) in einem Bereich innerhalb des Wulstteils (50) mit einer ringförmigen Form angeordnet ist.

## Revendications

1. Soupape de régulation de pression (100) pour un module de stockage d'énergie, comprenant :
un boîtier (10) comportant un corps principal (11) de boîtier avec une ouverture (15) et un évidement (13) formé à l'intérieur, et un corps de couvercle (12) qui ferme l'ouverture (15) du corps principal (11) de boîtier ; et
un élément de soupape (20) colonnaire qui est un élément élastique logé dans l'évidement (13) du corps principal (11) de boîtier du boîtier (10),
dans laquelle
le corps principal (11) de boîtier comporte un passage d'introduction de pression (19) formé d'un trou traversant dans lequel la pression provenant d'un module de stockage d'énergie est introduite au niveau d'un fond (17) de l'évidement (13), et le passage d'introduction de pression (19) comporte une partie d'introduction de pression (31) qui est un espace cylindrique traversant le corps principal (11) de boîtier, et une rainure (33) qui est reliée à la partie d'introduction de pression (31) et s'ouvre vers une surface du fond (17),
l'élément de soupape (20) est agencé de manière à recouvrir une ouverture (35) sur le côté du fond (17) dans le passage d'introduction de pression (19), le corps de couvercle (12) comporte une saillie (14) en contact avec une face d'extrémité de l'élément de soupape (20), et
la soupape de régulation de pression (100) est configurée de telle sorte que l'ouverture (15) du corps principal (11) de boîtier est fermée par le corps de couvercle (12), la saillie (14) du corps de couvercle (12) pressurisant l'élément de soupape (20), et l'élément de soupape (20) fermant de manière étanche à l'air le passage d'introduction de pression (19),
**caractérisée en ce que**
la rainure (33) comporte une rainure radiale (40) s'étendant vers l'extérieur à partir d'une partie de la partie d'introduction de pression (31).

2. Soupape de régulation de pression (100) selon la revendication 1, dans laquelle,
dans une section transversale orthogonale à la direction d'extension de la partie d'introduction de pression (31), la forme de la partie d'introduction de pression (31) est circulaire, et
une paire de parois latérales (41) de la rainure radiale (40) est parallèle à la direction radiale de la partie d'introduction de pression (31), ou n'est pas parallèle à la direction radiale de la partie d'introduction de pression (31) mais est formée obliquement par rapport à la direction radiale de la partie d'introduction de pression (31).

3. Soupape de régulation de pression (100) selon l'une quelconque des revendications 1 et 2, dans laquelle
la forme d'ouverture de la rainure radiale (40) est polygonale ou en éventail.

4. Soupape de régulation de pression (100) selon l'une quelconque des revendications 1 à 3, dans laquelle
une surface inférieure (43) de la rainure radiale (40) est une surface inclinée dans laquelle la profondeur de la rainure radiale (40) diminue progressivement vers l'extérieur à partir de la partie d'introduction de pression (31).

5. Soupape de régulation de pression (100) selon l'une quelconque des revendications 1 à 4, dans laquelle
la rainure (33) comporte une rainure transversale (45) qui croise la rainure radiale (40).

6. Soupape de régulation de pression selon la revendication 5, dans laquelle, dans une section transversale orthogonale à une direction d'extension de la partie d'introduction de pression (31), la forme de la partie d'introduction de pression (31) est circulaire, et
la rainure transversale (45) comporte une rainure en forme d'arc (47) formée le long d'un arc qui fait partie d'un cercle concentrique avec une surface de paroi (31a) constituant la partie d'introduction de pression (31).

7. Soupape de régulation de pression (100) selon la revendication 6, dans laquelle l'angle de l'arc est compris entre 30 et 60°.

8. Soupape de régulation de pression (100) selon la revendication 5, dans laquelle la rainure transversale (49) a une forme annulaire, et une partie bombée (50) ayant une forme annulaire est formée à l'extérieur de la rainure transversale (49) ayant la forme annulaire.

9. Soupape de régulation de pression (100) selon la revendication 8, dans laquelle lorsque la partie bombée (50) et la saillie (14) sont vues depuis une direction axiale centrale de la saillie (14), la totalité de la saillie (14) est située dans une zone à l'intérieur de la partie bombée (50) ayant une forme annulaire.
